# EUROPÄISCHE PATENTSCHRIFT

(11) **EP 0 396 853 B1**
(45) Veröffentlichungstag und Bekanntmachung des Hinweises auf die Patenterteilung: **15.11.1995**
(21) Anmeldenummer: 90101271.6
(22) Anmeldetag: 23.01.1990
(51) Int. Cl.: B01D 63/08, B01D 65/00

(54) **Abstandselement zur Lenkung von Strömungsmedien**
Spacer for conducting fluids
Elément d'espacement de conduction de fluides

(30) Priorität: 10.05.1989 DE 3915197
(43) Veröffentlichungstag der Anmeldung: 14.11.1990
(73) Patentinhaber: DT MEMBRANFILTER VERTRIEBS GMBH, D-21107 Hamburg (DE)
(72) Erfinder: Mohn, Jürgen, D-2057 Reinbek (DE); Heine, Wilhelm, D-2100 Hamburg 90 (DE)
(74) Vertreter: Niedmers, Ole, Dipl.-Phys.

(56) Entgegenhaltungen:
- EP-A- 0 045 073
- EP-A- 0 064 931
- EP-A- 0 195 461
- EP-A- 0 289 740
- FR-A- 2 287 256

## Beschreibung

Die Erfindung betrifft ein Abstandselement zur Lenkung von Strömungsmedien bei Vorrichtungen zum Filtern und Trennen der Strömungsmedien durch Mikrofiltration, Ultrafiltration und Umkehrosmose, wobei jeweils zwischen zwei im wesentlichen scheibenförmig ausgebildeten Abstandselementen ein Filterelement eingeschlossen ist und wobei auf wenigstens einer scheibenförmigen Oberfläche des Abstandselements eine Mehrzahl von erhaben von der Oberfläche wegstehenden Vorsprüngen vorgesehen ist, auf denen das nach Art eines Membrankissens ausgebildete vom Strömungsmedium beidseitig umflossene Filterelement (12) aufliegt.

Ein Abstandselement dieser Art ist aus der in der EP-A-0 289 740 beschriebenen Vorrichtung bekannt. Bei dieser Vorrichtung wird ein Gesamtkörper aus Abstandselementen und zwischen jeweils zwei Abstandselementen angeordneten Filterelementen gebildet. Der Gesamtkörper bildet ein geschlossenes System, bei dem das dortige Strömungsmedium in das geschlossene System eingebracht wird und dieses am Ende des geschlossenen Systems als aufkonzentriertes Strömungsmedium bzw. als Retentat verläßt, nachdem es uneingeschränkt alle Filterelementflächen zwangsweise hintereinander von außen nach innen bzw. von innen nach außen überstrichen hat. Das Partialdruckgefälle, das sich bei einer derartigen Reihenschaltung ergibt, ist zwar bei dieser bekannten Vorrichtung gegenüber den bis dahin bekannten Vorrichtungen vermindert, es ist jedoch für bestimmte Anwendungsfälle einer mit dem bekannten Abstandselementen bestückten Vorrichtung immer noch zu groß. Insbesondere immer dann, wenn derartige Vorrichtungen mit Pumpen betrieben werden, die aufgrund äußerer Bedingungen nur eine geringe Leistung abzugeben vermögen.

Aus der EP-A-0 195 461 ist eine Vorrichtung mit Abstandselementen bekannt bei der ein nicht in Form eines Membrankissens ausgebildetes Filterelement auf durchgehenden, gekrümmerten Vorsprüngen aufliegt. Die Vorsprünge führen ellipsenförmig durchgehend gekrümmt von einem mit Abstand zum Rand vorgesehen Loch zum anderen mit Abstand zum Rand vorgesehen Loch, wobei der Raum zwischen den Vorsprüngen der Raum ist, in dem das Strömungsmedium bzw. das Retentat, austretend beispielsweise aus dem ersten Loch zum Eintritt in das zweite Loch geführt wird.

Allgemein gilt, dass aufgrund der Konstruktion der bekannten sonstigen Abstandselemente und der Vorrichtungen, in denen diese bekannten Abstandselemente eingesetzt werden, tritt zwischen dem Einlaß (Rohlösung) und dem Auslaß (Rententat) des Strömungsmediums in den Vorrichtungen ein erhebliches Partialdruckgefälle auf, da das Strömungsmedium diese Vorrichtungen in der Regel nach Art einer Reihenschaltung mäanderförmig an den von den Abstandselementen bzw, Scheiben gehaltenen Membranfiltern vom Einlaß zum Auslaß durchläuft. Ein wesentlicher Grund des sich in der Regel nachteilig auswirkenden erheblichen Partialdruckgefälles liegt darin, daß die eigentliche Membran unmittelbar auf der Trägerplatte und/oder auf der Leitplatte aufliegt, so daß das Strömungsmedium beim Durchfließen des Filterelementenstapels in zunehmenden Maße gehemmt wird.

Es ist Aufgabe der vorliegenden Erfindung, ein Abstandselement zu schaffen, das ein gutes Umströmen des auf dem Abstandselement angeordneten Filterelements in Form eines Membrankissens gestattet, so daß auch eine Parallelschaltung von Membrankissen in einer Vorrichtung und/oder eine Reihenschaltung mehrerer Pakete parallel geschalteter Membrankissen möglich ist, um den Druckabfall des Strömungsmediums zwischen Zulauf und Ablauf zu minimieren, wobei das Membrankissen im wesentlichen differenzdruckstabil aufgenommen werden soll.

Gelöst wird die Aufgabe gemäß der Erfindung durch die gekennzeichneten Merkmale des Anspruchs 1

Der Vorteil des erfindungsgemäßen Abstandselements liegt im wesentlichen darin, daß das als Rohlösung die Membrankissen im wesentlichen vollständig flächig von der einen zur anderen Seite und beidseitig überstreichende Strömungsmedium praktisch nicht im Strömungsfluß gehindert wird, da die Vorsprünge nur eine infinitesimal kleine Berührungsfläche mit dem Membrankissen haben und so der Strom des Strömungsmediums nicht behindert wird, wodurch sich ebenfalls keine den Fluß des Strömungsmediums und die Filterwirkung des Membrankissens behindernden anorganischen Ablagerungen bilden können, deren Aufbau, wie man es bei Berührungsflächen von Trägern mit der Membraneinrichtung bisher kannte, verhindert werden.

Um die Membrankissen, die in der Regel am Außenumfang miteinander verschweißt sind, gut zwischen den Abstandselementen fixiert halten zu können, ist es vorteilhaft, die Vorsprünge unterschiedlich hoch auszubilden, d.h. am Randbereich, im Bereich der Schweißnaht des Membrankissens höher, so daß das Membrankissen dort ebenfalls sicher fixiert werden kann.

Gemäß einer vorteilhaften Ausgestaltung der Erfindung sind die Vorsprünge in einer Ebene parallel zu den Oberflächen mit einem im wesentlichen kreisförmigen Querschnitt ausgebildet, bei einer anderen vorteilhaften Ausgestaltung weisen die Vorsprünge in der Ebene parallel zu den Oberflächen einen im wesentlichen kugelförmigen Querschnitt auf, der aber auch vorzugsweise im wesentlichen tropfenförmig ausgebildet sein kann, wobei der tropfenförmige Querschnitt weitgehend eine Wirbelbildung bei dem an ihm entlangströmenden Strömungsmedium verhindert und einen Druckverlust reduziert.

Bei einer anderen vorteilhaften Ausgestaltung des Abstandselements weist dieses einen äußeren, im wesentlichen umlaufenden Rand an seinen beiden Oberflächen auf, wobei vorzugsweise einer der Ränder wenigstens um die Dicke eines Filterelements in bezug auf die Flächennormale der Oberfläche höher ist.

Es sei in diesem Zusammenhang darauf verwiesen, daß das Abstandselement keineswegs zwingend als im wesentlichen kreisförmig ausgebildete Scheibe ausgestaltet sein muß. Vielmehr richtet sich der Aufbau des Abstandselements in bezug auf seine äußeren Konturen, d. h. als Kreis, als beliebig geeignetes Vieleck oder dgl., nach der Art des Einsatzes des Abstandselements in der Vorrichtung. So kann auch das als Membrankissen ausgebildete Filterelement beliebige geeignete äußere Konturen haben, beispielsweise als Kreis, als Vieleck oder dgl., wobei die äußere Kontur des gewählten Abstandselements nicht zwingend mit der äußeren Kontur des darin aufgenommenen Membrankissens übereinstimmen muß. So hat es sich als vorteilhaft herausgestellt, das Abstandselement im wesentlichen kreisscheibenförmig auszubilden, während das darin aufgenommene Membrankissen beispielsweise vorteilhafterweise eine achteckige Kontur aufweist.

Das Abstandselement selbst kann grundsätzlich aus jedem beliebigen geeigneten Werkstoff bestehen, der dem Abstandselement bei geringem Gewicht eine hohe Festigkeit und eine leichte Herstellbarkeit gibt.

Vorteilhafterweise besteht das Abstandselement aus Kunststoff, vorzugsweise ABS, wobei ABS in einem Bereich, in dem eine hohe Qualität des Permeats, beispielsweise Trinkwasser- oder auch Reinstwasserqualität gefordert wird, besonders geeignet ist.

Das Abstandselement kann auch aus normalem Polystyrol oder auch aus Luran bestehen.

Die Erfindung wird nun unter Bezugnahme auf die nachfolgenden schematischen Zeichnungen anhand eines Ausführungsbeispieles beschrieben. Darin zeigen:
- Fig. 1: eine Draufsicht auf ein Abstandselement mit angedeuteter Strömungsrichtung des Strömungsmediums (Rohlösung),
- Fig. 2: einen Schnitt entlang der Linie A - B von Fig. 1,
- Fig. 3: einen Teilschnitt entlang der Linie C - D von Fig. 1 in vergrößertem Maßstab und
- Fig. 4: einen Schnitt durch eine Vorrichtung mit zwei Paketen parallel geschalteter, zwischen den Abstandselementen aufgenommener Membrankissen, wobei die beiden Pakete in Reihe geschaltet sind.

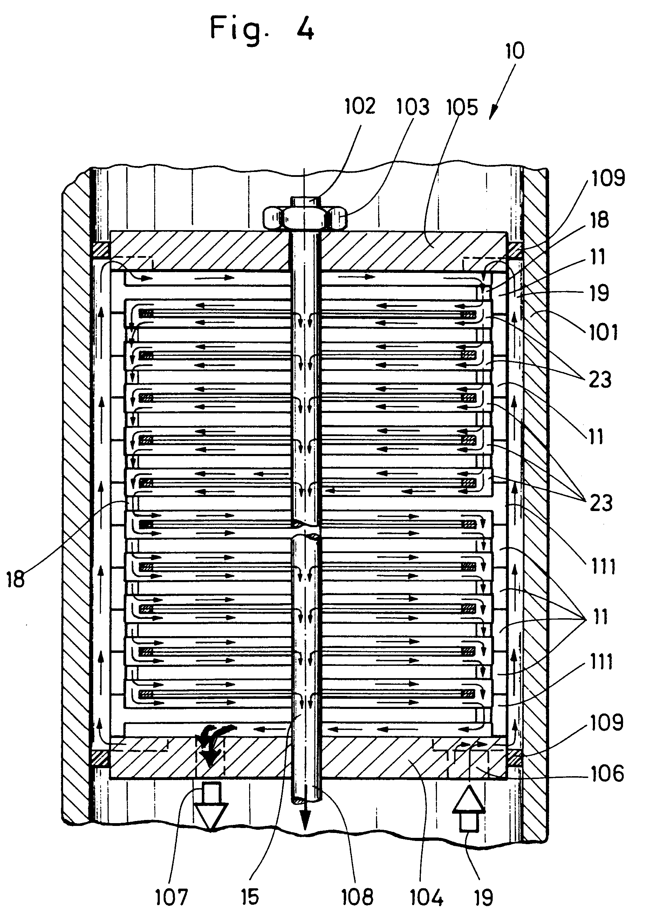

Eine Vorrichtung 10 zum Filtern und Trennen von Strömungsmedien 19 durch Umkehrosmose und Ultrafiltration ist beispielsweise in Fig. 4 dargestellt, auf die nachfolgend zunächst Bezug genommen wird. In dieser Vorrichtung 10 ist eine Mehrzahl von Filterelementen 12 und Abstandselementen 11 zusammengestapelt und bildet einen Filterelementenstapel vorbestimmter Länge.

Die Vorrichtung 10 wird zum besseren Verständnis des Aufbaus des Abstandselements im Zusammenwirken mit Filterelementen 12 in Form von Membrankissen erläutert. Die Vorrichtung 10 weist im wesentlichen ein rohrförmiges Gehäuse 101 auf. In das Gehäuse 101 sind abwechselnd Abstandselemente 11 und Filterelemente 12 eingesetzt, d. h. zwischen jedem der Abstandselemente 11 liegt ein Filterelement 12. Lediglich an beiden Enden des so gebildeten Filterelementenstapels weist das Abstandselement kein Filterelement 12 auf. Am anschlußseitigen Ende des Filterelementenstapels ist ein Anschlußflansch 104 vorgesehen, am entgegengesetzten Ende des Filterelementenstapels ein Endflansch 105. Der Filterelementenstapel und die beiden Flanschen 104, 105 werden durch einen zentralen Spannbolzen 102 zusammengehalten, der durch entsprechende zentrale Löcher aller vorgenannten Elemente hindurchgeht, wobei beiderseits des Filterelementenstapels der Spannbolzen 102 mit Muttern 103, von denen hier aus Vereinfachungsgründen lediglich eine gezeigt ist, versehen ist, die den Filterelementstapel zusammenhalten. Der Filterelementenstapel wird über Dichtungen 109 gegenüber dem rohrförmigen Gehäuse 101, in den der Filterelementenstapel eingesetzt ist, auf bekannte Weise abgedichtet.

Im Anschlußflansch 104 ist eine Öffnung für den Eintritt des eine zu trennende Rohlösung darstellenden Strömungsmediums 19 sowie ein Ablauf 108 für das Permeat und ein Ablauf 107 für das Retentat vorgesehen.

Ober die im Anschlußflansch 104 vorgesehene Zulauföffnung 106 tritt das Strömungsmedium 19 in den Innenraum des Gehäuses 101 ein und zwar in den Spalt zwischen dem Filterelementenstapel und der Innenwandung des Gehäuses 101. Das Strömungsmedium 19 gelangt in diesem Spalt in den Raum, der zwischen dem Endflansch 105 und dem daran angrenzenden Abstandselement 11 gebildet wird, und zwar dem Strömungsmedium 19 folgend, das im Inneren der Vorrichtung 10 durch die Pfeile 19 symbolisiert wird.

Das bei Betrachtung der Fig. 4 in der Vorrichtung 10 zuoberst angeordnete Abstandselement 11 weist nur eine in seinem Randbereich 16 im Scheibenkörper ausgebildete Durchtrittsöffnung 18 für das Strömungsmedium auf. Insofern gelangt das Strömungsmedium 19 durch diese Durchtrittsöffnung 18 in eine zwischen zwei Abstandselementen 11 gebildete Kammer 23 und, da eine Mehrzahl von Abstandselementen 11 derart angeordnet ist, daß die Durchtrittsöffnung 18 übereinander angeordnet sind, in die darunter liegenden Kammern 23 der jeweils benachbarten Abstandselemente 11.

Im vorliegenden Fall, vgl. Fig. 4, wird ein Paket von fünf derart miteinander verbundenen Abstandselementen 11 gebildet.

In der Kammer 23 ist, was im einzelnen noch weiter unten beschrieben wird, jeweils ein Filterelement 12 angeordnet. Das in den Kammern 23 befindliche Strömungsmedium 19 überstreicht beidseitig das in der Kammer 23 jeweils angeordnete Filterelement 12, in der Darstellung von Fig. 4 von rechts nach links und strömt zur linken Seite des Abstandselements 11, bei dem ebenfalls im Randbereich im Scheibenflächenkörper eine Durchtrittsöffnung 182 für das Strömungsmedium 19 ausgebildet ist.

In den in den Kammern 23 befindlichen Filterelementen 12, die Membrankissen sind, wird das Permeat zu einer im Filterelement 12 bzw. im Membrankissen ausgebildeten Öffnung, die bei der in Fig. 4 dargestellten Vorrichtung bzw. dem dort verwendeten Membrankissen 12 eine zentrale Öffnung ist, geleitet. Die in den Kammern 23 eingeschlossenen Filterelemente 12 bzw. Membrankissen werden gegenüber den sie einschließenden Abstandselementen auf bekannte Weise im Bereich zur Permeatabflußöffnung, die durch das zentrale Loch 15 symbolisiert ist, abgedichtet. Das Abstandselement 111, das bei der Darstellung von Fig. 4 unten das vorgenannte, aus fünf Abstandselementen 11 gebildete Paket begrenzt, weist, genau wie das oberste Abstandselement 111, lediglich eine in seinem Randbereich 16 im Scheibenkörper 17 ausgebildete Durchtrittsöffnung 18 für das Strömungsmedium 19 auf. Das hat zur Folge, daß gemäß der Darstellung von Fig. 4 nur durch die eine Durchtrittsöffnung 18 das Strömungsmedium 19 durch das vorgenannte Abstandselement 11 hindurchtreten kann. Nachfolgend ist wiederum ein aus fünf Abstandselementen 11 bestehendes Paket angeordnet, bei dem im wesentlichen gegenüberliegend Durchtrittsöffnungen 18, 182 für das Strömungsmedium 19 ausgebildet sind, so daß, wie beim obigen Paket beschrieben, auch in diesem zweiten Paket wiederum eine Mehrzahl von als Membrankissen ausgebildeten Filterelementen 12 beidseitig vom Strömungsmedium 19 umströmt werden. Dieses Paket wird unten in der in Fig. 4 dargestellten Vorrichtung 10 durch ein Abstandselement 111 begrenzt, das wiederum nur eine in seinem Randbereich 16 im Scheibenkörper 17 ausgebildete Durchtrittsöffnung 18 aufweist, so daß durch diese Durchtrittsöffnung 18 das gesamte die Vorrichtung 10 verlassende aufkonzentrierte Strömungsmedium 19 ( Retentat) die Vorrrichtung 10 durch den im Anschlußflansch 104 ausgebildeten Ablauf 107 verlassen kann.

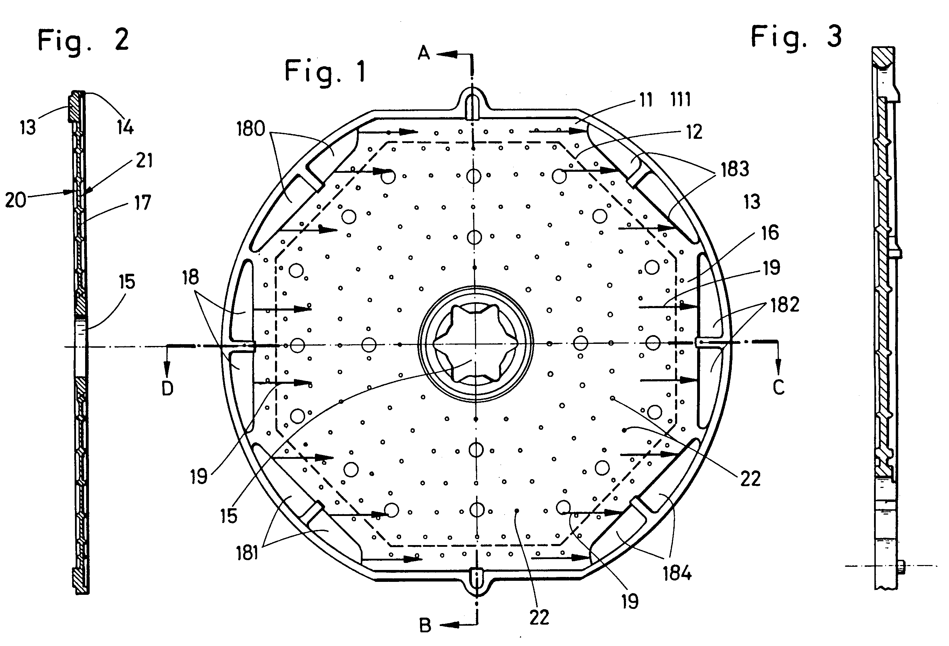

In Fig. 1 ist das erfindungsgemäße Abstandselement 11 bzw. 111 dargestellt, das bei der in der Fig. 1 dargestellten Form im wesentlichen durch einen kreisförmigen Scheibenkörper 17 gebildet wird, der an zwei gegenüberliegenden Seiten sehnenförmig begrenzt ist, d. h an diesen Stellen von einer streng kreisförmigen Form abweicht.

Der Scheibenkörper 17 weist zwei im wesentlichen parallele scheibenförmige Oberflächen 20, 21 auf. Das im wesentlichen durch den Scheibenkörper 17 gebildete Abstandselement 11 bzw. 111 weist zu beiden Seiten der scheibenförmigen Oberfläche 20, 21 einen Rand 13, 14 auf, der das Abstandselement 11, 111 im wesentlichen vollständig umgrenzt. In einem Bereich 16 des Randes des Abstandselements 11, 111, der beispielsweise durch eine gedachte Sehne und den die Sehne begrenzenden Rand 13, 14 gebildet wird, ist wenigstens im Scheibenkörper 17 eine Durchtrittsöffnung 18 ausgebildet, durch die das Strömungsmedium 19, wie vorangehend schon beschrieben, hindurchtritt. Der Durchtritt des Strömungsmediums 19 durch die Durchtrittsöffnung 18 ist in Fig. 1 durch die mit 19 bezeichneten Pfeile symbolisiert. Auf der der einen Durchtrittsöffnung 18 im wesentlichen gegenüberliegenden Seite des Scheibenkörpers 17 ist bei der Ausgestaltung des Abstandselements 11, wie sie in der Mehrzahl bei der Vorrichtung 10 gemäß Fig. 4 jeweils in der Mitte des Pakets angeordnet sind, eine weitere Durchtrittsöffnung 182 ausgebildet, in die das Strömungsmedium 19, nachdem es das gestrichelt dargestellte achteckige Filterelement 12 beidseitig umstrichen hat, wiederum eintritt. Sowohl im Randbereich 16 des Abstandselements 11, in dem die eine Durchtrittsöffnung 18 ausgebildet ist, als auch im anderen Randbereich 16, in dem die zweite Durchtrittsöffnung 182 angeordnet ist, können noch eine Mehrzahl von Durchtrittsöffnungen 180, 181 bzw. 183, 184 angeordnet sein, die dafür sorgen, daß das Strömungsmedium 19 mit großer Gleichmäßigkeit das auf dem Abstandselement 11, 111 liegende Filterelement 12 bestreicht.

Damit tatsächlich sichergestellt ist, daß das Filterelement 12 einerseits fest auf dem Abstandselement 11, 111 während des Vorbeistreichens des Strömungsmedium 19 liegt und andererseits, daß auch, bedingt durch die Auflage des Filterelements 12 auf dem Abstandselement 11, 111, die berührte Auflagefläche infinitesimal klein ist, ist auf den scheibenförmigen Oberflächen 20, 21 eine Mehrzahl von erhaben von der Oberfläche 20, 21 wegstehender Vorsprünge 22 vorgesehen, so daß lediglich auf diesen Vorsprüngen 22 das vom Strömungsmedium 19 beidseitig umflossene Membrankissen aufliegt. Die Vorsprünge 22 können in der Ebene parallel zu den Oberflächen 20, 21 einen beliebigen Querschnitt aufweisen, vorzugsweise ist dieser Querschnitt jedoch kreisförmig und/oder kugelförmig. Der höchste von den Oberflächen 20, 21 wegstehende Abschnitt der Vorsprünge 22 ist im Querschnitt halbkreisförmig ausgebildet, so daß, wie angestrebt, auch während des Betriebes der Vorrichtung 10 mit den erfindungsgemäßen Abstandselementen 11, 111 sowie den eingesetzten Membrankissen, diese tatsächlich nur mit einer infinitesimal kleinen Fläche auf den Spitzen der Vorsprünge aufliegen. Die Mehrzahl der auf der Oberfläche 20, 21 angeordneten Vorsprünge 22 ist darauf derart angeordnet, daß der Strom des Strömungsmediums 19 nicht unterbrochen wird, so daß auch durch die geeignet gewählte Art und den geeignet gewählten Ort der Anordnung der Vorsprünge 22 auf den Oberflächen 20, 21 die nachteiligen anorganischen und organischen Membranbelegungen, die bei anderen Vorrichtungen bzw. Filterelementen beobachtet wurden, völlig verhindert werden.

Das Abstandselement 11, 110 kann aus beliebigem geeignetem Werkstoff, beispielsweise Kunststoff wie Polystyrol, Acryl, Nitril-Butadien-Styrol-Copolymer (ABS), Styrol-Acryl-Nitril-Copolymer (SAN), Luran oder dgl. hergestellt werden. Es sei darauf hingewiesen, daß sich grundsätzlich auch nichtrostender Stahl zur Herstellung derartiger Abstandselemente 11, 111 eignet.

### Bezugszeichenliste

- 10: Vorrichtung
- 101: rohrförmiges Gehäuse
- 102: zentraler Spannbolzen
- 103: Mutter
- 104: Anschlußflansch
- 105: Endflansch
- 106: Zulauf (Rohlösung)
- 107: Ablauf (Retentat)
- 108: Ablauf (Permeat)
- 109: Dichtung
- 11: Abstandselement
- 111: Abstandselement
- 12: Filterelement
- 13: Rand
- 14: Rand
- 15: Loch
- 16: Randbereich
- 17: Scheibenkörper
- 18: Durchtrittsöffnung
- 180: Durchtrittsöffnung
- 181: Durchtrittsöffnung
- 181: Durchtrittsöffnung
- 183: Durchtrittsöffnung
- 184: Durchtrittsöffnung
- 19: Strömungsmedium
- 20: scheibenförmige Oberfläche
- 21: scheibenförmige Oberfläche
- 22: Vorsprung
- 23: Kammer

## Patentansprüche

1. Abstandselement zur Lenkung von Strömungsmedien (19) bei Vorrichtungen zum Filtern und Trennen der Strömungsmedien durch Mikrofiltration, Ultrafiltration und Umkehrosmose (10), wobei jeweils zwischen zwei im wesentlichen scheibenförmig ausgebildeten Abstandselementen (11) ein Filterelement (12) eingeschlossen ist und wobei auf wenigstens einer scheibenförmigen Oberfläche (20; 21) des Abstandselements eine Mehrzahl von erhaben von der Oberfläche wegstehenden Vorsprüngen (22) vorgesehen ist, auf denen das nach Art eines Membrankissens ausgebildete vom Strömungsmedium (19) beidseitig umflossene Filterelement (12) aufliegt, dadurch gekennzeichnet, daß die Abstandselemente (11) derauf angeordnet sind, daß sich eine Parallelschaltung von Filterelementen (12) und/oder eine Reihenschaltung mehrerer parallel geschalteter Filterelemente (12) ergibt und daß das Abstandselement (11) wenigstens eine an im wesentlichen gegenüberliegenden Seiten in seinem äußeren Randbereich im Scheibenkörper ausgebildete Durchtrittsöffnung (18) für das Strömungsmedium aufweist (19), wobei die Durchtrittsöffnung (18) durch eine gedachte Sehne und den die Sehne begrenzenden äußeren Rand (13; 14) gebildet wird und die Filterelemente (12) im wesentlichen vollständig flächig von der einen zur anderen Seite und beidseitig überstrichen werden.

2. Abstandselement nach Anspruch 1, dadurch gekennzeichnet, daß die Vorsprünge (22) unterschiedlich hoch sind.

3. Abstandselement nach einem oder beiden der Ansprüche 1 oder 2, dadurch gekennzeichnet, daß die Vorsprünge (22) in einer Ebene parallel zu den Oberflächen (20, 21) einen im wesentlichen kreisförmigen Querschnitt aufweisen.

4. Abstandselement nach einem oder mehreren der Ansprüche 1 bis 3, dadurch gekennzeichnet, daß die Vorsprünge (22) in einer Ebene parallel zu den Oberflächen (20, 21) einen im wesentlichen kugelförmigen Querschnitt aufweisen.

5. Abstandselement nach einem oder mehreren der Ansprüche 1 bis 4, dadurch gekennzeichnet, das dieses einen äußeren, im wesentlichen umlaufenden Rand (13, 14) an seinen beiden Oberflächen (20, 21) aufweist.

6. Abstandselement nach Anspruch 5, dadurch gekennzeichnet, daß einer der Ränder (13, 14) wenigstens um die Dicke eines Filterelements (12) in bezug auf die Flächennormale der Oberfläche (20, 21) höher ist.

7. Abstandselement nach einem oder mehreren der Ansprüche 1 bis 6, dadurch gekennzeichnet, daß es aus Kunststoff besteht.

8. Abstandselement nach Anspruch 7, dadurch gekennzeichnet, daß der Kunststoff Polystyrol ist.

9. Abstandselement nach Anspruch 7, dadurch gekennzeichnet, daß der Kunststoff Acrylnitril-Butadien-Styrol-Copolymere (ABS) ist.

10. Abstandselement nach Anspruch 7, dadurch gekennzeichnet, daß der Kunststoff Styrol-Acrylnitrit-Copolymer (SAN) ist.

11. Abstandselement nach Anspruch 7, dadurch gekennzeichnet, daß der Kunststoff Luran ist.

## Claims

1. Spacer for conducting fluids (19) in equipment for filtering and separating fluids by means of microfiltration, ultrafiltration and reverse osmosis (10), whereby a filter element (12) is enclosed between two spacers (11) substantially discoid in shape and whereby a large number of raised projections (22) are provided on at least one discoid surface (20; 21) of the spacer which project away from the surface and upon which the filter element (12) formed in the manner of a membrane cushion and surrounded by the fluid (19) on both sides is positioned, characterized in that the spacers (11) are configured in such a way that a parallel connection of filter elements (12) and/or a series connection of several filter elements (12) connected in parallel is produced and in that the spacer (11) presents at least one penetration aperture (18) for the fluid (19) formed within the disc body on substantially opposite sides in its external rim area, whereby the penetration aperture (18) is formed by a notional chord and the external rim delimiting the chord (13; 14) and the filter elements (12) are substantially coated over their entire surface from one side to the other and on both sides.

2. Spacer according to Claim 1, characterized in that the projections (22) are of differing heights.

3. Spacer according to one or both of Claims 1 or 2, characterized in that the projections (22) present a substantially circular cross-section in a plane parallel to the surfaces (20, 21).

4. Spacer according to one or more of Claims 1 to 3, characterized in that the projections (22) present a substantially spherical cross-section in a plane parallel to the surfaces (20, 21).

5. Spacer according to one or more of Claims 1 to 4, characterized in that it presents an external and substantially circumferential rim (13, 14) on both its surfaces (20, 21).

6. Spacer according to Claim 5, characterized in that one of the rims (13, 14) is higher than the planar normal of the surface (20, 21) by at least the thickness of a filter element (12).

7. Spacer according to one or more of Claims 1 to 6, characterized in that it consists of plastic.

8. Spacer according to Claim 7, characterized in that the plastic is polystyrene.

9. Spacer according to Claim 7, characterized in that the plastic is acrylonitrile-styrene-butadiene copolymer (ABS).

10. Spacer according to Claim 7, characterized in that the plastic is styrene-acrylonitrile copolymer (SAN).

11. Spacer according to Claim 7, characterized in that the plastic is Lurane.

## Revendications

1. Elément d'espacement de conduction de fluides (19) pour des dispositifs destinés à filtrer et à séparer des fluides par filtration microporeuse, ultrafiltration et osmose inversée (10), où un élément filtrant (12) est enfermé respectivement entre deux éléments d'espacement (11) ayant sensiblement la forme d'un disque et, où sont prévues, sur au moins une des surfaces (20 ; 21) en forme de disque de l'élément d'espacement, une pluralité de saillies (22) en relief, éloignées de la surface, sur lesquelles se trouve l'élément filtrant (12) entouré des deux côtés par un fluide (19), formé à la manière d'un coussin à membrane, caractérisé en ce que les éléments d'espacement (11) sont agencés de façon à donner un circuit parallèle d'éléments filtrants (12) et/ou un circuit série de plusieurs éléments filtrants (12) branchés en parallèle, en ce que l'élément d'espacement (11) présente pour le fluide (19), sur des côtés sensiblement opposés, dans son pourtour extérieur, au moins une ouverture de passage 18 formée dans le corps de disque, l'ouverture de passage (18) étant formée par une corde imaginaire et le bord extérieur (13 ; 14) limitant la corde et les éléments filtrants (12) étant enduits sensiblement entièrement en nappe, d'un côté à l'autre et des deux côtés.

2. Elément d'espacement selon la revendication 1, caractérisé en ce que les saillies (22) sont de hauteur différente.

3. Elément d'espacement selon l'une des revendications 1 ou 2, ou selon les deux, caractérisé en ce que les saillies (22) présentent dans un plan parallèle aux surfaces (20, 21) une section sensiblement circulaire.

4. Elément d'espacement selon l'une ou plusieurs des revendications 1 à 3, caractérisé en ce que les saillies (22) présentent dans un plan parallèle aux surfaces (20, 21) une section sensiblement sphérique.

5. Elément d'espacement selon l'une ou plusieurs des revendications 1 à 4, caractérisé en ce qu'il présente sur ses deux surfaces (20, 21) un bord (13, 14) extérieur, sensiblement réparti.

6. Elément d'espacement selon la revendication 5, caractérisé en ce qu'un des bords (13, 14) est plus haut d'au moins l'épaisseur d'un élément filtrant (12) par rapport à la normale au plan de surface (20, 21).

7. Elément d'espacement selon une ou plusieurs des revendications 1 à 6, caractérisé en ce qu'il est en matière synthétique.

8. Elément d'espacement selon la revendication 7, caractérisé en ce que la matière synthétique est du polystyrène.

9. Elément d'espacement selon la revendication 7, caractérisé en ce que la matière synthétique est un copolymère d'acrylnitrile-styrène-butadiène (ABS).

10. Elément d'espacement selon la revendication 7, caractérisé en ce que la matière synthétique est un copolymère styrène acrylo-nitrile (SAN).

11. Elément d'espacement selon la revendication 7, caractérisé en ce que la matière synthétique est du luran.
